# EUROPEAN PATENT APPLICATION

(11) **EP 2 068 226 A2**
(43) Date of publication of application: **10.06.2009**
(21) Application number: 08103807.7
(22) Date of filing: 02.05.2008
(51) Int. Cl.: G06F 1/16

(54) **Planar display assembled and supported through components by making use of adhesive**

(30) Priority: 05.12.2007 CN 200710195635
(71) Applicant: Oripix Company Limited, Taipei (TW)
(72) Inventor: Hu, Chung-Ming, Taipei (TW); Hu, Shu-Hua, Taipei (TW); Teng, Yi-Chuan, Taipei (TW)
(74) Representative: Muttock, Neil John

(57) **Abstract**

Disclosed is a planar display assembled and supported through components by making use of adhesive, mainly comprising: a transparent protection board, a display element, and an adhesive. Wherein, said display element is used as a photoelectric element (for example, an LC panel or a backlight module) forming a display. Said display elements can be glued and attached onto said transparent protection board by means of said adhesive such as Velcro, so as to reduce ordinary support elements utilized, thus significantly reducing the volume and weight of said planar display.

## Description

### BACKGROUND OF THE INVENTION

### Field of the Invention

The present invention relates to a display, and in particular to a planar display assembled and supported through components by making use of adhesive.

### The Prior Arts

Nowadays, the application of planar displays can roughly be classified as TV set for household utilization, computer display, or other indoor or outdoor displays. In order to catch and attract the attention gathered by signages, such as digital signages, large-sized panels are utilized for ordinary indoor or outdoor planar displays. But for unitary large-sized panel, the production cost is high, and its transportation and installation are rather difficult. In order to solve the problem, presently, large-sized display signage is formed by assembling a plurality of small-sized panels (for example, Liquid Crystal Display (LCD) panel or Organic Light Emitting Diode (OLED) panel etc.), and special assembly mechanism design and special display driving method are utilized in realizing an assembled planar display suitable for indoor or outdoor usage, and having advantages in production cost, transportation, and installation.

However, in the conventional special assembly mechanism, in order to properly support and secure a plurality of display elements, large quantities of elements, such as frames, locking pieces, and screws etc. have to be used, thus the entire volume of the display tends to be exceedingly voluminous. Therefore, the problem of how to effectively solve the afore-mentioned problem is a real technical challenge / bottleneck that has to be overcome, so as to achieve a large-sized, thin profile planar display.

### SUMMARY OF THE INVENTION

In view of the shortcomings and drawbacks of the prior art, the objective of the present invention is to provide "a planer display assembled and supported through components by making use of adhesive", and it is characterized in that, adhesive is utilized to glue and attach display elements onto a transparent protection board of a display. As such, through the utilization and cooperation of adhesive and transparent protection board, the ordinary support elements utilized can be drastically reduced, thus achieving significant reduction of volume and weight of a display.

To achieve the above-mentioned objective, the present invention provides "a planer display assembled and supported through components by making use of adhesive", mainly including: a transparent protection board, display elements, and an adhesive. Wherein, display elements are the photo-electric elements (for example, LC panels or backlight modules) constituting a planar display. When display elements are attached and glued onto a transparent protection board by utilizing adhesive (such as, Velcro), or various elements in a display are attached to each other by making use of adhesive, the conventional locking pieces, iron pieces utilized in supporting and securing a planar display can be replaced and saved, hereby realizing convenience in assembly, while achieving significant reduction in weight and volume.

In addition, the transparent protection board according to the present invention can be utilized as a protection and support structure for a planar display. Therefore, in case that an ordinary showcase or display window having large pieces of glass panes are directly utilized and modified / converted into an electronic display window, then not only the glass panes of the original display window or showcase do not have to be removed, but it may also be used as supporting structure and protection mechanism (utilized as a transport protection board in a display) of display elements; thus in cooperation with adhesive, then the problem that an overly large size display can hardly be put into a showcase or display window due to its bulky volume caused by a display itself together with various elements, such as frames, locking pieces and screws etc. can be solved. Meanwhile, since this kind of display is used to put into a showcase or display window, it is not liable to be damaged by outside factors or be exposed to theft, hereby facilitating ensuring its safety and maintenance.

Further scope of the applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The related drawings in connection with the detailed description of the present invention to be made later are described briefly as follows, in which:

Figs. 1A to 1E are schematic diagrams respectively of planar display assembled and supported through components by making use of adhesive according to the present invention;

Fig. 2 is a side view of a planar display assembled and supported through components by making use of adhesive according to the present invention; and

Fig. 3 is another side view of a planar display assembled and supported through components by making use of adhesive according to the present invention.

### DETAILED DESCRIPTION OF THE PREFERRED EMBODIMENT

The purpose, construction, features, functions and advantages of the present invention can be appreciated and understood more thoroughly through the following detailed description with reference to the attached drawings.

In the embodiment of the present invention, adhesives (such as Velcro) are utilized to achieve adhesion between transparent protection board and panel, panel and backlight module, or backlight module and support elements. Namely, the portions originally requiring locking pieces can all be replaced by Velcro. Thus, its application is not restricted to fixing and securing panels and backlight modules onto a transparent protection board. Hereinafter, the various configurations of the present invention are described in detail in the following embodiments. Meanwhile, in order to facilitate describing and explaining the structure, function and effectiveness of the present invention, in the following description, liquid crystal display is mainly taken as an example for explanation, however, the application of the present invention is not limited to liquid crystal display. As a matter of fact, all the aspects concerning the manufacturings, revisions, and modifications of planar display such as Organic Light Emitting Diode (OLED) display or Plasma Display Panel (PDP) display may belong to the scope of application of the present invention.

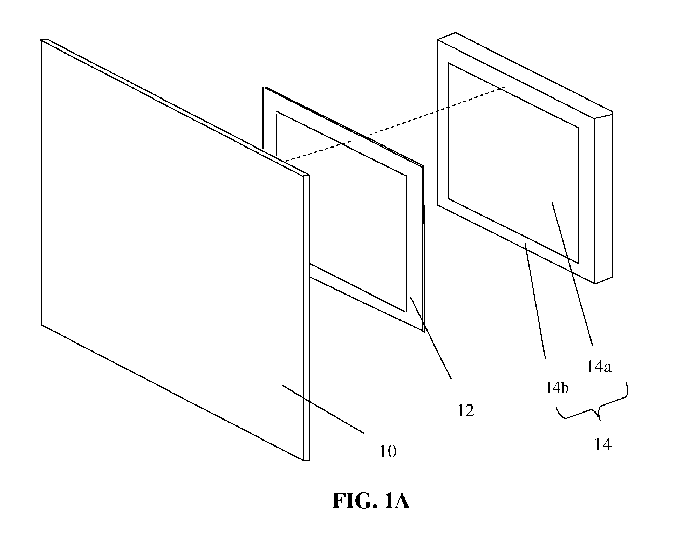

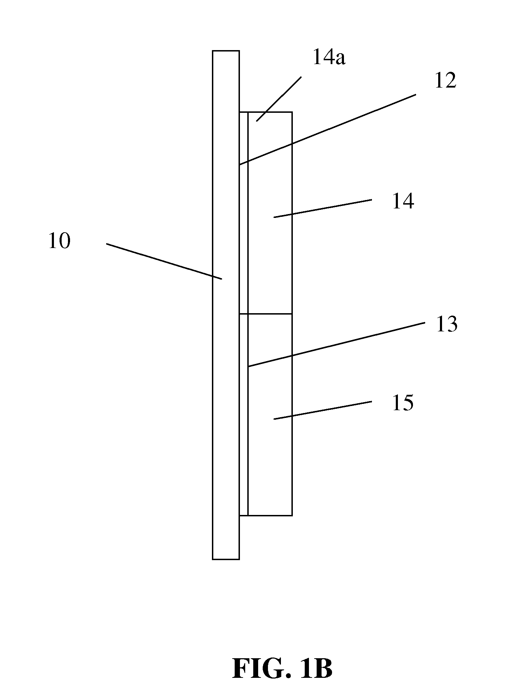

Firstly, referring to Figs. 1A to 1E for schematic diagrams respectively of "planar display assembled and supported through components by making use of adhesive" according to the present invention. As shown in Fig. 1A, the display of the present invention mainly composed of: a transparent protection board 10 made of transparent material; a display element 14, constituting the photo-electric element of a display; and an adhesive 12 made of adhesive material. Next, referring to Figs. 1B∼1E for top views of a planar display assembled and supported through components by making use of adhesive according to the present invention. It must be noted that, though connection lines and circuit boards are necessary elements of a display, yet they are not included in the drawings for clarity and ease of explanation.

In the above description, the transparent protection board 10 is made of glass or acrylic. In case that the interference of signal caused by ambient light reflection due to overly excessive light intensity, a layer of anti-reflection film can be attached further onto the transparent protection board 10. Display elements 14-15 are panels (such as, LC panel, OLED panel, or PDP panel), and display elements 16-17 are backlight modules. In this configuration, the panels mentioned composed mainly of a plurality of pixels, each of which is located at the cross point of a data line connected to a data driver and a gate line connected to a gate driver; the backlight module is used to provide light source to the panel; and adhesives 12-13 can be classified as removable and non-removable. The removable adhesives 12-13 can be Velcros. In case that adhesives 12-13 are Velcro, then the features of Velcro can be used to fix or install easily the display elements 14-15, or to replace the locking pieces, screws, that are originally required to lock and attach certain portions in the display, thus facilitate the execution of maintenance operations.

In the "planar display assembled and supported through components by making use of adhesive" of the present invention, display element 14 can be attached and glued onto a transparent protection board 10 by means of adhesive 12 (as shown in Fig. 1B). As such, display element 14 may obtain the support of transparent protection board 10 through adhesive 12, hereby realizing the reduced usage of conventional support elements, and the significant reduction of volume and weight of planar display. By way of example, in case that the display is made by making use of OLED panel or PDP panel, thus due to the fact that such panel itself having the self illumination property, there is no need of additional backlight modules as light source. As such, the transparent protection board may be used to further provide support and protection functions, thus panel and transparent protection board are directly attached and bonded together through adhesive, hereby achieving the requirement of "thin profile display".

Or, alternatively, as shown in Fig. 1A, in case that the display element 14 is an LC panel, then it is provided with a display area (visible area) 14a and a marginal invisible area 14b. In order not to obstruct display area 14a, adhesive 12 is formed along the marginal invisible area 14b, as such, the entire appearance of adhesive 12 is similar to a "□" shape of marginal invisible area 14b or two symmetric pairs of stripes. Moreover, as the scope of adhesive 12 is getting larger, the intensity of adhesion it provides is getting stronger, thus LC panel or backlight module may be attached and glued onto transparent protection board 10 directly or indirectly in obtaining effective and sufficient support. Therefore, the size, shape and position of adhesive can be adjusted and varied depending on actual requirements.

Subsequently, as shown in Fig. 1B, in order to realize large-sized display, the display elements 14,15 can be attached and glued onto an individual transparent protection board 10 by means of adhesives 12,13. However, in practice, the marginal invisible areas of display elements 14-15 can be overlapped, hereby reducing the overall marginal invisible area of a display.

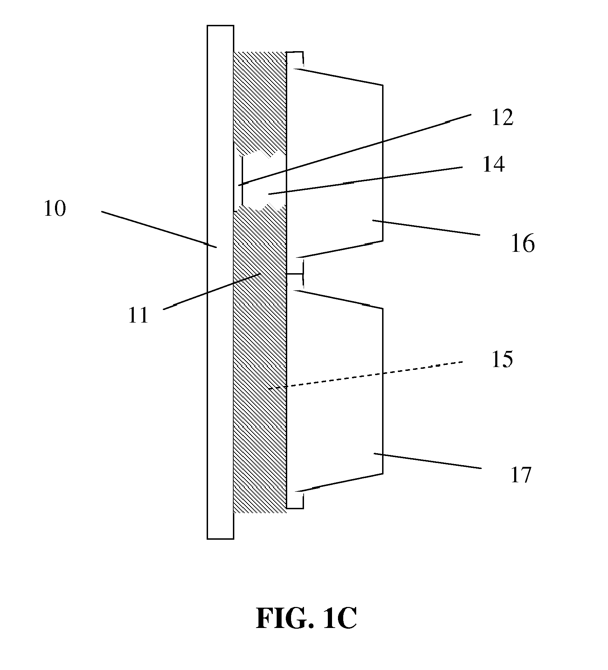

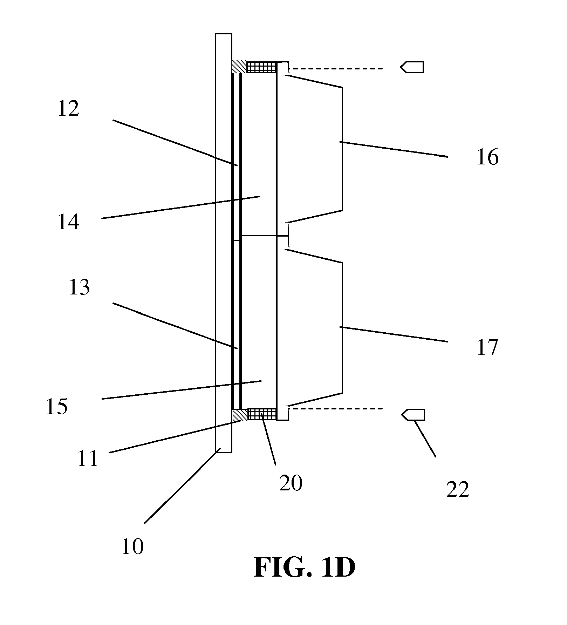

Moreover, as shown in Fig.1C, concerning display element 16 (namely, backlight module), it may similarly be attached and glued onto display elements 14-15 by means of adhesive 11, hereby attaching backlight module 16 indirectly onto transparent protection board 10. Meanwhile, in order to further strengthen the support capability, a support body 20 may likewise be glued and attached onto a transparent protection board 10 through utilizing adhesive as shown in Fig. 1D; and then a support body 20 and an opposite securing mechanism on a display elements16 (namely, backlight module) are used to support backlight module. By way of example, Velcro (adhesive 11 or other adhesive blocks) is used to glue and attach at least two intervening pieces (for example, a wooden plate, an aluminum piece or an iron piece etc.)(namely, support body 20) to the two opposite sides of a transparent protection board 10; subsequently, the original lip portion on backlight module is utilized, and the backlight module is locked and attached onto a support body 20 on a transparent protection board 10 by making use of screw 22 or other securing means, hereby attaching backlight module indirectly onto transparent protection board 10, thus achieving enhanced support of backlight module without having to increase additional support structure.

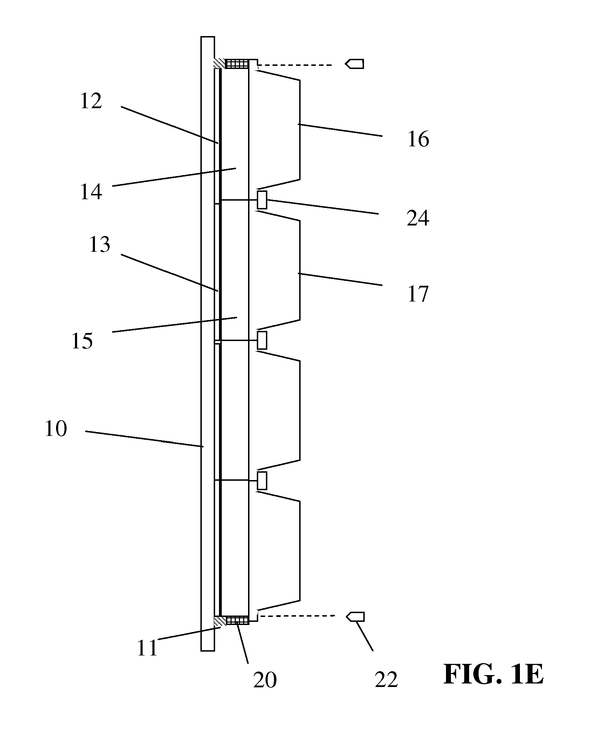

In addition, usually a plurality of backlight modules are disposed for a larger-sized display (as shown in Figs 1D & 1E). For the backlight modules not bordering side edges of a transparent protection board 10, the support they acquire is less than those bordering side edges, since their lip portions are not locked and attached onto transparent protection board respectively (for example, in a combination of 9 backlight modules, the backlight modules not located at either of the four ends do not have side edges of transparent protection board to lock and secure onto). Therefore, in addition to utilizing adhesive to make lip portions of respective backlight modules attach to each other, backlight modules may further include a coupling mechanism 24 (for example, through series-connected hooking or iron-bar securing) as shown in Fig. 1E, so that a plurality of backlight modules may be connected together through this coupling mechanism. In other words, through up-down and / or left-right coupling and / or connection, the support between the respective backlight modules can be enhanced significantly.

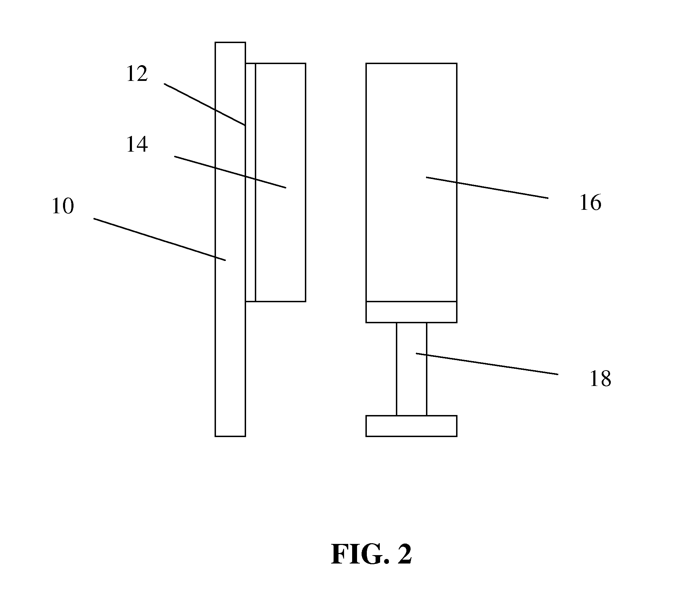

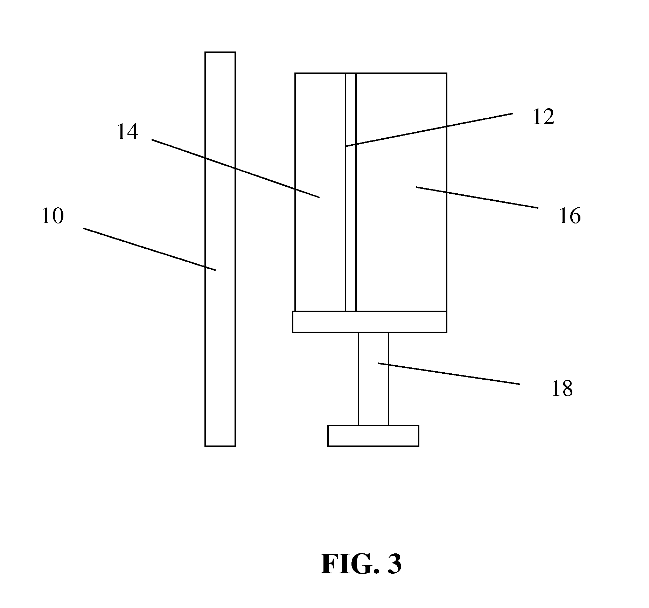

However, due to the fact that backlight module (display element 16) is rather heavy in weight, a support element 18 is additionally designed and added to provide enhanced support in assisting the long-term support capability as provided by adhesive ( as shown in Figs. 2 & 3).

Moreover , referring to Fig. 2 for a side view of "a planar display assembled and supported through components by making use of adhesive" according to the present invention. As shown in Fig.2, the planar display of the present invention mainly composed of: a transparent protection board 10 made of transparent material; a display element 14, is used as a photo-electric element constituting a display; adhesive 12, made of adhesive material; and a support element 18 used to support display element 16. Wherein, the structure of the support element 18 is positioned relative to display element 16, so as to support backlight module. Meanwhile, since panel (namely, display element 14) is glued and attached onto transparent protection board 10 through adhesive 12, thus there is no need of conventional support elements (such as, screws, iron pieces, etc.), as such, the size and weight of display of the present invention is far less than those of the conventional display.

Furthermore, referring to Fig. 3 for another side view of a planar display assembled and supported through components by making use of adhesive" according to the present invention. As shown in Fig.3, the planar display of the present invention mainly composed of: a transparent protection board 10 made of transparent material, a display element 14 , used as a photo-electric element constituting a display (such as, LC panel, OLED panel, or PDP panel), an adhesive 12 made of adhesive material; and a support element 18, used to support the combination of display element 14 and display element 16 (namely, backlight module). In this structure, adhesive 12 is used to make the panel and backlight module attached and bonded together. The structure of support element 18 is disposed relative to the combination of afore-mentioned panel and backlight module, that can be a fixed or movable structure, and is used to support panel and backlight module.

Meanwhile, the planar display of the present invention can be expanded vertically or horizontally by making use of the above-mentioned fixed or movable support structure 18, hereby realizing large-sized planar display. Therefore, the support structure 18 must at least be provided with support functions, thus it does not have to be fixed on specific positions.

Summing up the above, the various elements contained in the present invention can be utilized interchangeably, and the quantities, positions, and sizes etc. of the elements can be adjusted further depending on actual requirements, thus fully realizing the benefit and effectiveness of the present invention.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements that are within the scope of the appended claims.

## Claims

1. A planar display assembled and supported through components by making use of adhesive, comprising:
a transparent protection board, made of a transparent material;
a display element, used to constitute a photo-electric element of a display; and
an adhesive, formed by an adhesive material;
wherein, said adhesive is used to attached said display element onto said transparent protection board.

2. The planar display assembled and supported through components by making use of adhesive as claimed in claim 1, wherein said transparent protection board is made of glass or acrylic.

3. The planar display assembled and supported through components by making use of adhesive as claimed in claim 1, wherein said display element is a panel or a backlight module.

4. The planar display assembled and supported through components by making use of adhesive as claimed in claim 1, wherein said adhesive can be classified as removable or non-removable.

5. The planar display assembled and supported through components by making use of adhesive as claimed in claim 4, wherein
said removable adhesive is Velcro.

6. The planar display assembled and supported through components by making use of
adhesive as claimed in claim 3, further comprising:
a support element, used to support said backlight module;
wherein, said panel is attached onto said transparent protection board by means of said adhesive.

7. The planar display assembled and supported through components by making use of
adhesive as claimed in claim 3, further comprising:
a support body, provided with a securing mechanism;
wherein, said support body is attached onto said transparent protection board by means of said adhesive, and is used to support said backlight module in conjunction with said opposite securing mechanism on said backlight module.

8. The planar display assembled and supported through components by making use of adhesive as claimed in claim 3, wherein
said backlight module further comprising a coupling mechanism, and that is used to couple a plurality of said backlight modules together.

9. A planar display assembled and supported through components by making use of adhesive, comprising:
a transparent protection board, made of a transparent material;
a display element, used as a photo-electric element constituting a display;
an adhesive, formed by an adhesive material; and
a support element, used to support said display element;
wherein, a plurality of said display elements are connected to each other by means of said adhesive.

10. The planar display assembled and supported through components by making use of adhesive as claimed in claim 9, wherein
said display panel is a panel or a backlight module.

11. The planar display assembled and supported through components by making use of adhesive as claimed in claim 9, wherein
said adhesive can be classified as removable and non-removable.

12. The planar display assembled and supported through components by making use of adhesive as claimed in claim 11, wherein
said removable adhesive is Velcro.

13. The planar display assembled and supported through components by making use
of adhesive as claimed in claim 10, further comprising:
a support body, provided with a securing mechanism;
wherein, said support body is attached onto said transparent protection board by means of said adhesive, and is used to support said backlight module in conjunction with said opposite securing mechanism on said backlight module.

14. The planar display assembled and supported through components by making use of adhesive as claimed in claim 10, wherein
said backlight module further comprising a coupling mechanism, and that is used to couple a plurality of said backlight modules together.
